# EUROPÄISCHE PATENTSCHRIFT

(11) **EP 3 847 727 B1**
(45) Veröffentlichungstag und Bekanntmachung des Hinweises auf die Patenterteilung: **12.07.2023**
(21) Anmeldenummer: 19762791.2
(22) Anmeldetag: 03.09.2019
(51) Int. Cl.: H01R 35/02, B64D 11/06, H01R 24/60, H01R 13/633

(54) **STECKVERBINDUNGSDOSE UND PASSAGIERVERSORGUNGSMODUL**
PLUG-IN CONNECTION SOCKET AND PASSENGER SERVICE MODULE
PRISE DE CONNEXION PAR ENFICHAGE ET MODULE D'ALIMENTATION DE PASSAGER

(30) Priorität: 05.09.2018 DE 102018121680
(43) Veröffentlichungstag der Anmeldung: 14.07.2021
(73) Patentinhaber: Lufthansa Technik AG, 22335 Hamburg (DE)
(72) Erfinder: PIOTROWSKI, Pawel, 12043 Berlin (DE)
(74) Vertreter: Glawe, Delfs, Moll
(86) Internationale Anmeldenummer: PCT/EP2019/073440
(87) Internationale Veröffentlichungsnummer: WO 2020/048961

(56) Entgegenhaltungen:
- DE-A1- 2 623 145
- DE-A1- 19 547 879
- DE-A1-102013 205 191
- DE-B3-102010 062 837
- US-B1- 10 063 021

## Beschreibung

Die Erfindung betrifft eine Steckverbindungsdose für Fahrzeuge, insbesondere Flugzeuge, sowie ein Passagierversorgungsmodul umfassend eine entsprechende Steckverbindungsdose.

In Fahrzeugen insbesondere des öffentlichen Personenverkehrs besteht regelmäßig die Anforderung, den Fahrgästen bzw. Passagieren Strom- und/oder Datenanschlüsse zur Verfügung zu stellen, an denen sie ihre persönlichen elektronischen Geräte anschließen können, um deren Energiespeicher zu laden oder Daten zu erhalten. Die Anbindung erfolgt dabei mit Kabeln, die regelmäßig mit standardisierten Steckern, bspw. USB-Steckern, versehen sind.

Entsprechende Strom- und/oder Datenanschlüsse müssen derart robust ausgestaltet sein, dass auch evtl. auftretende sog. Missbrauchslasten durch Ziehen an einem eingesteckten Kabel, insbesondere in einer Richtung die nicht unmittelbar zum Herausziehen des Steckers aus dem Anschluss führt, ausgehalten werden können. Auch muss die Struktur, an welcher ein Strom- und/oder Datenanschluss im Fahrzeug befestigt ist, entsprechenden Belastungen standhalten können.

Bei der Nachrüstung von Fahrzeugen mit Strom- und/oder Datenanschlüssen ist nicht immer gewährleistet, dass eine ausreichend feste Struktur zur Befestigung der Anschlüsse daran zur Verfügung steht. Dies gilt bspw. für Verkehrsflugzeuge. Im Bereich der Passagiersitze in der Kabine ist die zur Aufnahme von Strom- und/oder Datenanschlüssen grundsätzlich denkbare Struktur, wie die Wandpaneele oder der Bereich der Leselampen über den Sitzen, regelmäßig nicht ausreichend fest, um den angesprochenen Missbrauchslasten standhalten zu können, weshalb eine Nachrüstung von Strom- und/oder Datenanschlüsse in diesen Bereichen regelmäßig nicht möglich ist.

Insbesondere bei einer Anordnung von Anschlüssen im Bereich der Leselampen über den Sitzen besteht weiterhin das Problem, dass dort eingesteckte Kabel eine evtl. Evakuierung behindern können. So können insbesondere Passagiere auf Fensterplätzen üblicher Sitzanordnungen in einem Flugzeug durch in entsprechende Anschlüsse eingesteckte Kabel beim Verlassen ihres Sitzplatzes behindert werden.

Aus dem Dokument DE 195 47 879 A1 ist eine Steckdose bekannt, die derart verschwenkbar und verdrehbar ist, dass sie sich durch Ziehen an einem darin eingesteckten Kabel innerhalb eines bestimmen Winkelbereichs um eine Zentralachse in Zugrichtung ausrichten kann, wobei eine Feder zur Zurückstellung auf die Zentralachse vorgesehen ist. Bei Zugbelastungen in eine Richtung außerhalb des genannten Winkelbereichs treten jedoch weiterhin Missbrauchslasten auf.

Die Dokumente DE 26 23 145 A1 und DE 10 2013 205191 A1 zeigen eine dazu vergleichbare Steckdose, wobei es bei der Steckdose gemäß DE 10 2013 205191 A1 an einer Rückstellung durch eine Feder o. Ä. fehlt.

Nachteilig an diesem Stand der Technik ist, dass bei Zugbelastungen eines darin eingesteckten Kabels in einer Richtung außerhalb des unmittelbaren Schwenkbereichs der jeweiligen Steckdose weiterhin zu Missbrauchslasten kommt.

Aufgabe der Erfindung ist es, eine Steckverbindungsdose für Fahrzeuge zu schaffen, bei der die aus dem Stand der Technik bekannten Nachteile nicht mehr oder nur noch in vermindertem Umfang auftreten.

Gelöst wird diese Aufgabe durch eine Steckverbindungsdose gemäß dem Hauptanspruch sowie ein Passagierversorgungsmodul gemäß Anspruch 8. Vorteilhafte Weiterbildungen sind Gegenstand der abhängigen Ansprüche.

Demnach betrifft die Erfindung eine Steckverbindungsdose für Fahrzeuge umfassend eine von einer Zugriffsseite zugängliche Buchse mit einer Einsteckrichtung, wobei die Buchse in einem Schwenkkörper angeordnet ist, der gegenüber einer Aufnahme derart beweglich gelagert ist, dass die Einsteckrichtung der Buchse des Schwenkkörpers ausgehend von einem stationären Zustand des Schwenkkörpers in alle Richtungen winkelverschwenkbar ist, und wobei eine Rückstellvorrichtung zur Rückstellung des Schwenkkörpers in den stationären Zustand vorgesehen ist und wobei am Schwenkkörper eine Auslösevorrichtung zum Auslösen eines in die Buchse eingeführten Steckers bei nicht-stationärem Zustand des Schwenkkörpers vorgesehen ist.

Weiterhin betrifft die Erfindung ein Passagierversorgungsmodul zur Anordnung im Innenraum von Fahrzeugen umfassend eine die Zugriffsseite bildende Blende mit wenigstens einer darin eingelassenen erfindungsgemäßen Steckverbindungsdose.

Die Erfindung hat erkannt, dass die Anforderungen an die Festigkeit der Struktur, an denen eine Steckverbindungsdose angeordnet werden soll, deutlich reduziert werden können, wenn durch geeignete Ausgestaltung der Steckverbindungsdose durch eingesteckte Kabel evtl. eingebrachte Missbrauchsbelastungen auf ein Maximum begrenzt werden. Bei der erfindungsgemäßen Steckverbindungsdose wird dies erreicht, indem die eigentliche Buchse in einem Schwenkkörper angeordnet ist, der sich bei Auftreten einer Missbrauchslast so verschwenkt, dass die Einsteckrichtung der Buchse grundsätzlich in Richtung der Missbrauchslast weist, sodass bei übermäßiger Missbrauchslast der Stecker aus der Buchse gezogen wird. In der Folge reduziert sich die maximal von der Struktur aufzunehmende Belastung aufgrund von über einen eingesteckten Stecker aufgebrachten Missbrauchslasten auf diejenige Belastung, bei welcher der Stecker aus der Buchse gezogen wird. Gegenüber feststehenden Buchsen, bei denen der Stecker nur bei Missbrauchslasten in einem gewissen Kegel um die Einsteckrichtung gezogen wird, kann der Öffnungswinkel des Kegels, in dem Missbrauchslasten zum Herausziehen des Steckers führen, bei einer erfindungsgemäßen Steckverbindungsdose aufgrund ihrer Verschwenkbarkeit, die bspw. ±30° bis 45° betragen kann, regelmäßig um die 60° bis 90° betragen. Vereinfacht gesagt wird durch die erfindungsgemäß vorgesehene Verschwenkbarkeit erreicht, dass bei jeglichen Missbrauchslasten eher der Stecker aus der Buchse gezogen wird als dass übermäßige Belastungen auf die Struktur, an der die Steckverbindungsdose befestigt ist, übertragen werden. Im Falle einer Evakuierung lösen sich in die Buchse eingesteckte Kabel ebenfalls einfach, sodass sie die Evakuierung praktisch nicht behindern.

Die Verschwenkbarkeit der Steckverbindungsdose kann durch einen in einer Aufnahme angeordneten Schwenkkörper erreicht werden, wobei Schwenkkörper und Aufnahme aufeinander abgestimmte, bspw. kugelförmige oder kugelschichtförmige, Gleitflächen aufweisen. Der Schwenkkörper kann so gleitend gegenüber der Aufnahme verschwenkt werden. Alternativ ist es möglich, den Schwenkkörper gegenüber der Aufnahme kardanisch zu lagern. Eine entsprechende kardanische Aufhängung ermöglicht ebenfalls die erfindungsgemäß vorgesehene Verschwenkbarkeit.

Die Verschwenkbarkeit ist vorzugsweise durch einen Anschlag begrenzt, wobei der Anschlag die Verschwenkbarkeit in alle Richtung ausgehend vom stationären Zustand vorzugsweise gleichförmig begrenzt. Die Verschwenkbarkeit kann bspw. auf einen Winkel von maximal 45°, weiter vorzugsweise von maximal 35° beschränkt sein. Durch entsprechende Begrenzungen können evtl. Zuleitungen von der Aufnahme zum Schwenkkörper vor Überbeanspruchung und Beschädigung geschützt werden.

Um dennoch ein einfaches Einstecken von Steckern in die Steckverbindungsdose zu gewährleisten, ist erfindungsgemäß eine Rückstellvorrichtung vorgesehen, welche den Schwenkkörper mit der Buchse grundsätzlich in einen stationären Zustand überführt, womit auch die Einsteckrichtung im unbelasteten Zustand eindeutig definiert ist.

Um die bei Missbrauchslasten ggf. auf die Struktur übertragene Belastungen weiter zu reduzieren, ist am Schwenkkörper eine Auslösevorrichtung zum Auslösen eines in die Buchse eingeführten Steckers bei nicht-stationärem Zustand des Schwenkkörpers vorgesehen. Durch eine entsprechende Auslösevorrichtung kann erreicht werden, dass ein Stecker bereits aufgrund des Verschwenkens des Schwenkkörpers aus dem stationären Zustand aus der Buchse ausgelöst wird und dazu nicht zusätzlich noch eine ausreichende hohe Kraft auf den Stecker in Einsteckrichtung der Buchse wirken muss. Insbesondere bei quer zur Einsteckrichtung im stationären Zustand wirkenden Missbrauchskräften kann so eine schnellere Auslösung erreicht werden, wodurch die auf die Struktur zu übertragenen Kräfte weiter reduziert werden können.

Vorzugsweise umfasst die Auslösevorrichtung einen parallel zur Einsteckrichtung von der Buchse bis zur Aufnahme erstreckenden Pin, wobei die Aufnahme derart ausgebildet ist, dass der daran entlanggleitende Pin in Richtung Buchse verschoben ist, wenn der Schwenkkörper nicht im stationären Zustand ist, um so einen in die Buchse eingeführten Stecker auszulösen, indem nämlich der Stecker durch den Pin aus der Buchse herausgedrückt wird. Die Aufnahme kann bspw. eine rotationsellipsoide Gleitfläche für den Pin aufweisen, deren Rotationssymmetrieachse mit der Achse des Pins im stationären Zustand zusammenfällt. Im stationären Zustand liegt der Pin dann am Scheitelpunkt der rotationsellipsoiden Gleitfläche an und wird bei jeglicher Winkelauslenkung des Schwenkkörpers in Richtung Buchse verschoben. Der Pin kann durch eine Feder in Richtung der Aufnahme vorgespannt sein.

Es ist bevorzugt, wenn der Schwenkkörper um die Einsteckrichtung drehbar gelagert ist. So kann sichergestellt werden, dass um die Einsteckrichtung wirkende Momente keine Belastungen der Struktur, an der die Steckverbindungsdose angeordnet ist, zur Folge hat. Die Drehbarkeit des Schwenkkörpers kann durch einen Anschlag o. Ä. begrenzt sein, um evtl. Zuleitungen von der Aufnahme zum Schwenkkörper vor Überbeanspruchung und Beschädigung zu schützen.

Die Rückstellvorrichtung kann Federn und/oder Magnete umfassen. Die Federn können dabei zwischen Aufnahme und Schwenkkörper verlaufen. Bei einer Ausgestaltung mit Magneten kann ein Magnet an der Aufnahme, ein anderer an dem Schwenkkörper angeordnet sein, deren Pole derart zueinander ausgerichtet sind, dass aufgrund der magnetischen Anziehung der Schwenkkörper in den stationären Zustand gezogen wird. Neben einer metallischen Feder als Teil der Rückstellvorrichtung können insbesondere auch Kunststofffedern oder Kunststoff-Formteile mit integriertem Federelement zum Einsatz kommen.

Die Steckverbindungsdose kann eine Kontrollleuchte zur Anzeige der ordnungsgemäßen Steckverbindung eines Steckers in der Buchse umfassen. Die Kontrollleuchte kann dabei im Schwenkkörper und/oder in der Blende angeordnet werden. Durch eine entsprechende Kontrollleuchte kann einem Nutzer angezeigt werden, ob der von ihm in die Buchse eingeführte Stecker ordnungsgemäß eingeführt ist. Die Kontrollleuchte kann bspw. anhand der Feststellung eines Stromflusses über die Buchse angesteuert werden.

Die Kontrollleuchte kann auch durch das eine Ende eines Lichtleiters gebildet sein, wobei die Lichtquelle am anderen Ende des Lichtleiters angeordnet ist. Die Lichtquelle kann dabei bspw. unmittelbar auf einem von der eigentlichen Steckverbindungsdose getrennt ausgeführten Elektronikmodul angeordnet sein. Die Steckverbindungsdose und insbesondere deren Schwenckörper kann dadurch frei von aktiven Elektronikkomponenten gehalten werden, wodurch eine einfachere Austauschbarkeit erreicht wird.

Es ist bevorzugt, wenn es sich bei der Buchse um eine USB-Buchse handelt. Entsprechende Buchsen sind zum Daten- und/oder Stromanschluss persönlicher elektronischer Geräte besonders geeignet.

Zur Erläuterung des erfindungsgemäßen Passagierversorgungsmoduls wird auf die vorstehenden Ausführungen verwiesen. Wird, wie dargelegt, durch die erfindungsgemäße Steckverbindungsdose die auf die darunterliegende Struktur - in diesem Fall das Passagierversorgungsmodul - einwirkenden Belastungen begrenzt, ist auch die von dem Passagierversorgungsmodul auf diejenige Struktur, an der wiederum das Passagierversorgungsmodul befestigt ist, entsprechend begrenzt.

Das Passagierversorgungsmodul kann modular aufgebaut sein. Insbesondere kann es neben der Blende mit wenigstens einer eingelassenen Steckverbindungsdose ein davon getrennt ausgeführtes und über eine lösbare Kabelverbindung mit der Buchse der wenigstens einen Steckverbindungsdose verbundenes Elektronikmodul umfassen. Durch diese Auftrennung in Module ist eine einfache Austauschbarkeit der einzelnen Module gegeben. Ist bspw. eine Steckverbindungsdose mechanisch beschädigt, muss lediglich das entsprechende Modul ausgetauscht werden, während das Elektronikmodul erhalten bleiben kann. Auch kann das Elektronikmodul gesondert vom Modul mit der wenigstens einen Steckverbindungsdose ausgetauscht werden, um bspw. neue oder andere Funktionen zur Verfügung stellen zu können.

Es ist bevorzugt, wenn eine der dem Passagierversorgungsmodul zugeordneten Anzahl an Passagierplätzen entsprechende Anzahl an Steckverbindungsdosen vorgesehen ist. So kann beispielsweise in Passagierflugzeugen, in denen das Passagierversorgungsmodul neben den Leselampen oberhalb der Sitzreihen angeordnet werden kann, eine für jeweils eine Sitzreihe ausreichende Anzahl (häufig drei) an Steckverbindungsdosen vorgesehen sein. Das Passagierversorgungsmodul kann dabei vergleichbar zu dem bekannten Leselampenmodul ausgestaltet sein, wobei - wie bereits dargelegt - die evtl. zusätzliche Elektronik als gesondertes Modul ausgeführt sein kann.

Die Erfindung wird nun anhand vorteilhafter Ausführungsformen unter Bezugnahme auf die beigefügten Zeichnungen beispielhaft beschrieben. Dabei zeigen nicht alle Figuren erfindungsgemäße Ausführungsformen; diese Figuren und die dazugehörigen Erläuterungen sind aber hilfreich für das Verständnis der Erfindung sowie zur Veranschaulichung von Ausführungsalternativen. Es zeigen:
- Figur 1a-d:: eine schematische Darstellung eines ersten Ausführungsbeispiels eines nicht erfindungsgemäßen Passagierversorgungsmoduls mit einer nicht erfindungsgemäßen Steckverbindungsdose;
- Figur 2a, b:: eine schematische Darstellung eines zweiten Ausführungsbeispiels eines erfindungsgemäßen Passagierversorgungsmoduls mit einer erfindungsgemäßen Steckverbindungsdose;
- Figur 3:: eine schematische Darstellung eines dritten Ausführungsbeispiels eines nicht erfindungsgemäßen Passagierversorgungsmoduls mit einer nicht erfindungsgemäßen Steckverbindungsdose;
- Figur 4:: eine schematische Darstellung eines vierten Ausführungsbeispiels eines erfindungsgemäßen Passagierversorgungsmoduls mit einer erfindungsgemäßen Steckverbindungsdose; und
- Figur 5:: eine schematische Darstellung eines fünften Ausführungsbeispiels eines nicht erfindungsgemäßen Passagierversorgungsmoduls mit einer nicht erfindungsgemäßen Steckverbindungsdose.

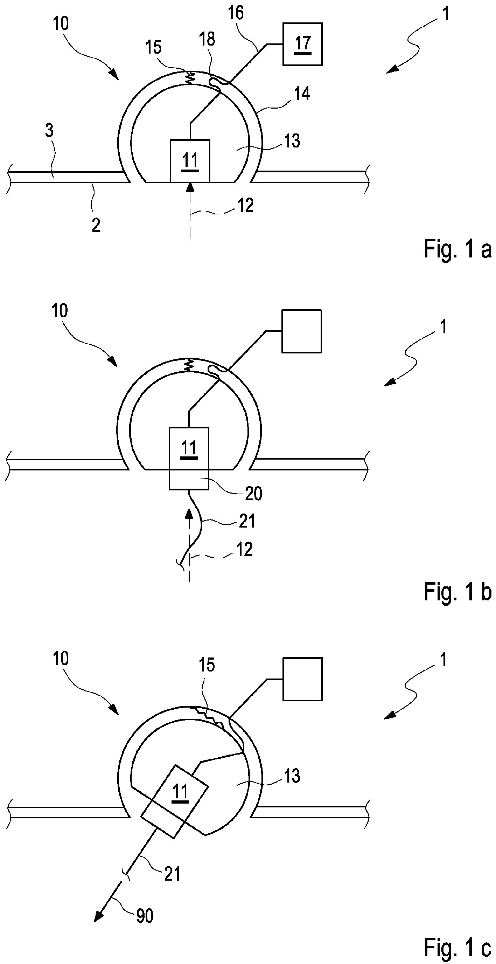

In Figur 1a-d ist ein Passagierversorgungsmodul 1 im schematischen Schnitt gezeigt. Das Passagierversorgungsmodul 1 umfasst eine die letztendliche Zugriffsseite 2 bildende Blende 3, mit der das Passagierversorgungsmodul 1 auch an der Struktur, bspw. im Bereich der Leselampen in der Passagierkabine eines Flugzeuges, befestigt werden kann.

In der Blende 3 eingelassen ist eine erfindungsgemäße Steckverbindungsdose 10, die zur Stromversorgung dient.

Die Steckverbindungsdose 10 weist eine von der Zugriffsseite 2 zugängliche Buchse 11 mit einer Einsteckrichtung 12 auf. Die Buchse 11 ist als USB-Buchse ausgeführt, sodass Passagiere über mit einem USB-Stecker versehene Kabel ihre persönlichen elektronischen Geräte, wie bspw. Mobiltelefone, über die USB-Buchse 11 aufladen können. Auch eine Datenübertragung über die USB-Buchse 11 ist möglich.

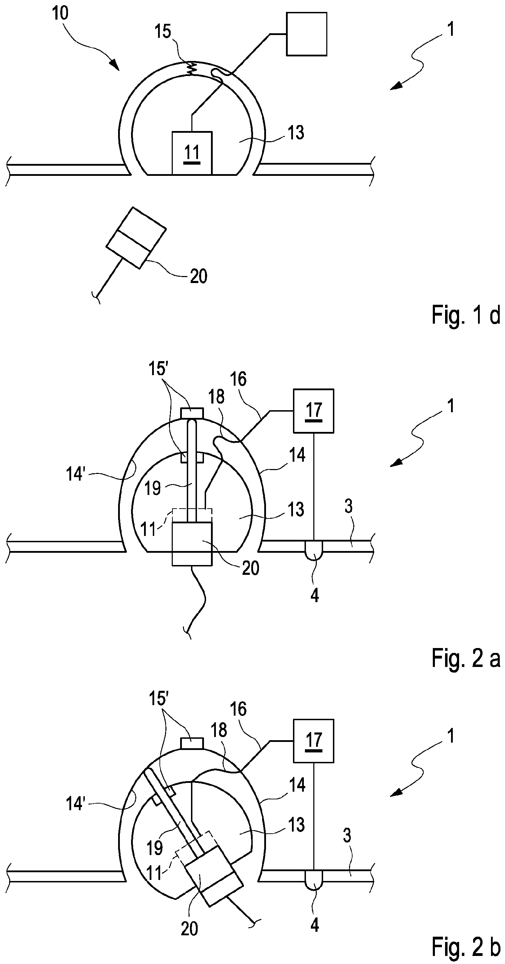

Die Buchse 11 ist in einem Schwenkkörper 13 angeordnet, der in einer Aufnahme 14 derart schwenkbar gelagert ist, dass sich die Buchse 11 bzw. deren Einsteckrichtung 12 winkelverschwenken lässt. Schwenkkörper 13 und Aufnahme 14 sind dazu im Wesentlichen kugelförmig ausgestaltet, wobei der Schwenkkörper 13 in der Aufnahme 14 gleitend gelagert ist. Der Spalt zwischen Schwenkkörper 13 und Aufnahme 14 in Figur 1 sowie den nachfolgenden Figuren dient lediglich der Illustration. Die den Spalt begrenzenden Flächen liegen eigentlich gleitend aneinander.

Zwischen Schwenkkörper 13 und Aufnahme 14 ist eine Feder 15 als Rückstellvorrichtung vorgesehen, welche den Schwenkkörper 13 grundsätzlich in den in Figur 1a gezeigten stationären Zustand bewegt bzw. in diesem hält. Gleichzeitig begrenzt die Feder 15 durch ihre maximale Ausdehnung die Auslenkung des Schwenkkörpers 13 gegenüber der Aufnahme 14 auf ca. 35° (vgl. Figur 1c).

Die Buchse 11 ist über eine lösbare Kabelverbindung 16 mit einem getrennt von der Blende 3 und der Steckverbindungsdose 10 ausgebildeten Elektronikmodul 17, welches die elektrische Leistung auf dem übergeordneten Bordnetz mit der erforderlichen Spannung bereitstellt, verbunden. Die Kabelverbindung 16 ist im Übergang zwischen Schwenkkörper 13 und Aufnahme 14 in einer Schlaufe 18 gelegt, damit die Kabelverbindung 16 die Schwenkbewegung vom Schwenkkörper 13 nicht behindert.

Anhand der Figuren 1b-d wird nun die Funktionsweise der Steckverbindungsdose 10 näher erläutert.

Da sich der Schwenkkörper 13 und somit auch die Buchse 11 im in Figur 1a dargestellten Ausgangszustand aufgrund der Feder 15 im stationären Zustand befindet, ist auch die Einsteckrichtung 12 der Buchse 11 in einer für das Einstecken eines Kabelsteckers 20 günstigen Lage (Figur 1b).

Wird nun an dem Kabel 21 des Kabelsteckers 20 in die durch den Pfeil 90 in Figur 2c angedeutete Richtung gezogen, richtet sich der Schwenkkörper 13 und somit auch die Buchse 11 entsprechend dieser Missbrauchsbelastung aus, wobei u. a. auch die Feder 15 gespannt wird.

Übersteigt die Missbrauchsbelastung die Auslösekraft der Buchse 11, wird der Kabelstecker 20 aus der Buchse 11 herausgezogen und der Schwenkkörper 13 schnellt aufgrund der Feder 15 wieder in den stationären Zustand zurück (vgl. Figur 1d).

Bei der Ausführungsvariante gemäß Figur 1a-d sind die von der Aufnahme 11 an die Blende 3 bzw. die umgebende Struktur übertragenen Belastungen durch die Auslösekraft der Buchse 11 begrenzt. Indem sich die Buchse 11 grundsätzlich in Richtung der auftretenden Missbrauchsbelastung ausrichtet, besteht insbesondere nicht die Gefahr, dass eine übermäßige Missbrauchsbelastung in die Buchse 11 eingebracht wird, ohne die Auslösekraft zu überschreiten.

In Figur 2a, b ist ein zweites Ausführungsbeispiel eines erfindungsgemäßen Passagierversorgungsmoduls 1 mit einer Steckverbindungsdose 10 dargestellt. Aufgrund der vorhandenen Ähnlichkeiten zu der Ausführung aus Figur 1a-d wird nachfolgend lediglich auf die Unterschiede zu eben dieser Ausführungsform eingegangen.

Die Aufnahme 14 der in eine Blende 3 eingelassenen Steckverbindungsdose 10 weist eine rotationsellipsoide Gleitfläche 14` auf, auf der ein in dem Schwenkkörper 13 geführter und bis zur Buchse 11 ragender Pin 19 gleitet. In dem stationären Zustand des Schwenkkörpers 14 liegt der Pin 19 im Scheitelpunkt der rotationsellipsoiden Gleitfläche 14' und ist in der Folge soweit aus der Buchse 11 zurückgezogen, dass dort problemlos ein Kabelstecker 20 eingeführt werden kann (Figur 2a). Sobald der Schwenkkörper 13 ausgelegt wird, gleitet der Pin 19 auf der rotationsellipsoiden Gleitfläche 14' und wird derart relativ zur Buchse 11 verschoben, dass der in die Buchse 11 eingeführte Kabelstecker 20 aus der Buchse 11 hinausgedrückt und somit bei Verschwenken des Schwenkkörpers 13 ausgelöst wird, selbst wenn die aus einer Missbrauchsbelastung resultierende Kraft in Einsteckrichtung (nach evtl. Verschwenken) die eigentliche Auslösekraft der Buchse 11 ggf. nicht übersteigt.

Die Rückstellvorrichtung ist im Ausführungsbeispiel gemäß Figur 2a, b durch zwei Magnete 15' gebildet, von denen der eine an der Aufnahme 14, der andere ringförmig um den Pin 19 an dem Schwenkkörper 13 vorgesehen ist. Die Magnete 15` sind dabei so orientiert, dass sie sich gegenseitig anziehen, womit die in Figur 2a dargestellte Position des Schwenkkörpers 13 den stabilen Zustand bildet.

Der Schwenkkörper 13 ist um die Einsteckachse 12 herum drehbar. Dazu ist die Schlaufe 18 der Kabelverbindung 16 ausreichend lang gewählt, dass diese Drehbewegung auch bei ausgelenktem Schwenkkörper 13 nicht oder nur möglichst wenig behindert wird.

In der Blende 3 ist eine Leuchtdiode als der Steckverbindungsdose 10 zugeordnete Kontrollleuchte 4 vorgesehen, die über eine lösbare Kabelverbindung mit dem Elektronikmodul 17 verbunden ist. Über die Kontrollleuchte 4 kann angezeigt werden, ob ein über die Buchse 11 angeschlossenes elektronisches Gerät geladen wird und/oder ob eine Datenverbindung besteht. Über die Kontrollleuchte 4 kann so einfach erkannt werden, ob sich der Kabelstecker 20 ggf. ungewollt gelöst hat. In Figur 2a würde die Kontrollleuchte 4 demnach aufleuchten, in Figur 2b nicht.

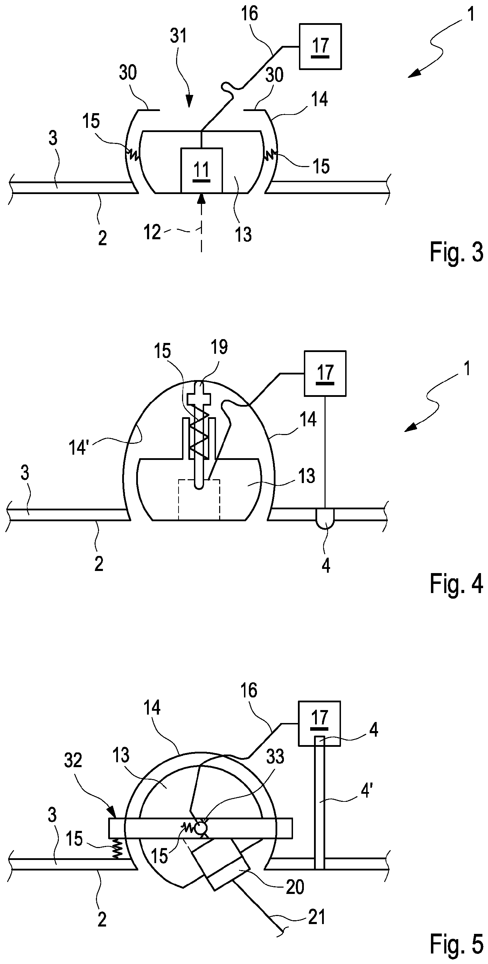

In Figur 3 ist ein weiteres Ausführungsbeispiel eines Passagierversorgungsmoduls 1 mit einer Steckverbindungsdose 10 dargestellt, welches auf dem ersten Ausführungsbeispiel gemäß Figuren 1 a-d beruht, weshalb im Folgenden lediglich auf die Unterschiede eingegangen wird.

Der Schwenkkörper 13 und die Aufnahme 14 weisen jeweils nur eine kugelschichtförmige Gleitfläche auf, die eine Verschwenkung des Schwenkkörpers 13 gegenüber der Aufnahme 14 grundsätzlich ermöglichen. Am von der Blende 3 abgewandten Ende sind als Teil der Aufnahme 14 Anschläge 30 vorgesehen, welche die Verschwenkung des Schwenkkörpers 13 begrenzen. Zwischen den Anschlägen 30 ist ein Bereich 31 zur Kabeldurchführung vorgesehen, der Bereich 31 hat dabei eine Fläche von mehr als dem Fünffachen der Querschnittsfläche der Kabelverbindung 16.

Es sind über den Umfang verteilt mehrere Federn 15 vorgesehen, die der Rückstellung des Schwenkkörpers 13 in den dargestellten stationären Zustand dienen. Des Weiteren begrenzen die Federn 15 aufgrund ihrer maximalen Ausdehnung die Drehung des Schwenkkörpers um die die Einsteckachse 12.

In Figur 4 ist ein viertes Ausführungsbeispiel eines erfindungsgemäßen Passagierversorgungsmoduls 1 dargestellt, welches auf dem Ausführungsbeispiel gemäß Figur 2a, b basiert, wobei jedoch die Rückstellvorrichtung des Schwenkkörpers 13 abweichend ausgestaltet ist.

Im Ausführungsbeispiel gemäß Figur 4 wird anstelle der beiden Magnete 15` (vgl. Figur 2a, b) der Pin 19 durch eine Feder 15 gegen die Gleitfläche 14' der Aufnahme 14 gedrückt. Da die Gleitfläche 14` rotationsellipsoid ist, drängt der Schwenkkörper 13 aufgrund des federvorgespannten Pins 19 in den in Figur 4 dargestellten stationären Zustand.

In Figur 5 ist ein weiteres, auf Figur 1a-d basierendes Ausführungsbeispiel eines Passagierversorgungsmoduls 1 gezeigt. Anders als in Figur 1a-d ist der Schwenkkörper 13 hierbei jedoch nicht gleitend in der Aufnahme 14, sondern über eine kardanische Aufhängung 32 gelagert. Die kardanische Aufhängung 32 ermöglicht ein freies Verschwenken des Schwenkkörpers 13 in alle Richtungen, wobei neben Federn 15 zur Rückstellung in einen stationären Zustand auch Anschläge 33 zur Begrenzung des Verschwenkwinkels als Teil der kardanischen Aufhängung 32 vorgesehen sein können. Das Elektronikmodul 17 weist eine Kontrollleuchte 4 auf, deren Licht über einen von dem Elektronikmodul 17 lösbaren Lichtleiter 4' zur Blende 3 geleitet wird, dass ein Aufleuchten der Kontrollleuchte 4 von der Zugriffsseite 2 wahrgenommen werden kann. Über die Kontrollleuchte 4 kann am freien Ende des Lichtleiters 4' angezeigt werden, ob ein über die Buchse 11 angeschlossenes elektronisches Gerät geladen wird und/oder ob eine Datenverbindung besteht.

## Patentansprüche

1. Steckverbindungsdose (10) für Fahrzeuge umfassend eine von einer Zugriffsseite (2) zugängliche Buchse (11) mit einer Einsteckrichtung (12),wobei die Buchse (11) in einem Schwenkkörper (13) angeordnet ist, der gegenüber einer Aufnahme (14) derart beweglich gelagert ist, dass die Einsteckrichtung (12) der Buchse (11) ausgehend von einem stationären Zustand des Schwenkkörpers (13) in alle Richtungen winkelverschwenkbar ist, wobei eine Rückstellvorrichtung (15, 15') zur Rückstellung des Schwenkkörpers (13) in den stationären Zustand vorgesehen ist,
**dadurch gekennzeichnet, dass**
am Schwenkkörper (13) eine Auslösevorrichtung (14', 19) zum Auslösen eines in die Buchse (11) eingeführten Steckers (20) bei nicht-stationärem Zustand des Schwenkkörpers (13) vorgesehen ist.

2. Steckverbindungsdose nach Anspruch 1,
**dadurch gekennzeichnet, dass**
die Auslösevorrichtung (14', 19) einen parallel zur Einsteckrichtung von der Buchse (11) bis zur Aufnahme (14) erstreckenden Pin (19) umfasst, wobei die Aufnahme (14) derart ausgebildet ist, dass der daran entlanggleitende Pin (19) in Richtung Buchse (11) verschoben ist, wenn der Schwenkkörper (13) nicht im stationären Zustand ist, um so einen in die Buchse (11) eingeführten Stecker (20) auszulösen.

3. Steckverbindungsdose nach einem der vorhergehenden Ansprüche,
**dadurch gekennzeichnet, dass**
der Schwenkkörper (13) um die Einsteckrichtung (12) drehbar gelagert ist.

4. Steckverbindungsdose nach einem der vorhergehenden Ansprüche,
**dadurch gekennzeichnet, dass**
die Rückstellvorrichtung Federn (15) und/oder Magnete (15`) umfasst.

5. Steckverbindungsdose nach einem der vorhergehenden Ansprüche,
**dadurch gekennzeichnet, dass**
eine Kontrollleuchte (4) zur Anzeige der ordnungsgemäßen Steckverbindung eines Steckers (20) in der Buchse (11) vorgesehen ist.

6. Steckverbindungsdose nach einem der vorhergehenden Ansprüche,
**dadurch gekennzeichnet, dass**
die Buchse (11) eine USB-Buchse ist.

7. Passagierversorgungsmodul (1) zur Anordnung im Innenraum von Fahrzeugen umfassend eine die Zugriffsseite (2) bildende Blende (3) mit wenigstens einer darin eingelassenen Steckverbindungsdose (10) gemäß einem der vorhergehenden Ansprüche.

8. Passagierversorgungsmodul nach Anspruch 7,
**dadurch gekennzeichnet, dass**
das Passagierversorgungsmodul (1) modular aufgebaut ist und neben der Blende (3) mit wenigstens einer eingelassenen Steckverbindungsdose (10) ein davon getrennt ausgeführtes und über eine lösbare Kabelverbindung (16) mit der Buchse (11) der wenigstens einen Steckverbindungsdose (10) verbundenes Elektronikmodul (17) umfasst.

9. Passagierversorgungsmodul nach Anspruch 7 oder 8,
**dadurch gekennzeichnet, dass**
eine der dem Passagierversorgungsmodul (1) zugeordneten Anzahl an Passagierplätzen entsprechende Anzahl an Steckverbindungsdosen (10) vorgesehen ist.

## Claims

1. Plug-in connection box (10) for vehicles, comprising a socket(11) which is accessible from an access side (2) and has an insertion direction (12), wherein the socket (11) is arranged in a pivot body (13) which is mounted in a movable manner in relation to a receptacle (14) in such a way that the insertion direction (12) of the socket (11) can be pivoted at an angle in all directions starting from a stationary state of the pivot body (13), wherein a return apparatus (15, 15') for returning the pivot body (13) to the stationary state is provided, **characterized in that** a release device (14', 19) for releasing a plug (20) which is inserted into the socket (11) when the pivot body (13) is in the non-stationary state is provided on the pivot body (13).

2. Plug-in connection box according to Claim 1, **characterized in that** the release device (14', 19) comprises a pin (19) which extends from the socket (11) as far as the receptacle (14) parallel to the insertion direction, wherein the receptacle (14) is designed in such a way that the pin (19) which slides along it is displaced in the direction of the socket (11) when the pivot body (13) is not in the stationary state, in order to in this way release a plug (20) which is inserted into the socket (11) .

3. Plug-in connection box according to either of the preceding claims, **characterized in that** the pivot body (13) is mounted such that it can rotate about the insertion direction (12).

4. Plug-in connection box according to one of the preceding claims, **characterized in that** the return apparatus comprises springs (15) and/or magnets (15').

5. Plug-in connection box according to one of the preceding claims, **characterized in that** a control lamp (4) for indicating the correct plug-in connection of a plug (20) into the socket (11) is provided.

6. Plug-in connection box according to one of the preceding claims, **characterized in that** the socket (11) is a USB socket.

7. Passenger service module (1) for arrangement in the interior of vehicles, comprising a panel (3) which forms the access side (2) and has at least one plug-in connection box (10) according to one of the preceding claims incorporated therein.

8. Passenger service module according to Claim 7, **characterized in that** the passenger service module (1) is of modular construction and, in addition to the panel (3) with at least one incorporated plug-in connection box (10), comprises an electronics module (17) which is embodied separately from said panel and is connected to the socket (11) of the at least one plug-in connection box (10) via a detachable cable connection (16).

9. Passenger service module according to Claim 7 or 8, **characterized in that** a number of plug-in connection boxes (10) which corresponds to the number of passenger spaces associated with the passenger service module (1) is provided.

## Revendications

1. Prise de connexion par enfichage (10) pour véhicules, comprenant une douille (11) accessible depuis un côté d'accès (2) avec une direction d'enfichage (12), la douille (11) étant agencée dans un corps pivotant (13) qui est monté de manière mobile par rapport à un logement (14) de telle sorte que la direction d'enfichage (12) de la douille (11) peut être pivotée angulairement dans toutes les directions à partir d'un état stationnaire du corps pivotant (13), un dispositif de rappel (15, 15') étant prévu pour le rappel du corps pivotant (13) à l'état stationnaire,
**caractérisée en ce que**
un dispositif de libération (14', 19) est prévu sur le corps pivotant (13) pour libérer une fiche (20) insérée dans la douille (11) lorsque le corps pivotant (13) n'est pas à l'état stationnaire.

2. Prise de connexion par enfichage selon la revendication 1, **caractérisée en ce que** le dispositif de libération (14', 19) comprend une broche (19) s'étendant parallèlement à la direction d'enfichage depuis la douille (11) jusqu'au logement (14), le logement (14) étant configuré de telle sorte que la broche (19) glissant le long de celui-ci est déplacée en direction de la douille (11) lorsque le corps pivotant (13) n'est pas à l'état stationnaire, de manière à libérer une fiche (20) insérée dans la douille (11).

3. Prise de connexion par enfichage selon l'une quelconque des revendications précédentes, **caractérisée en ce que** le corps pivotant (13) est monté de manière rotative autour de la direction d'enfichage (12).

4. Prise de connexion par enfichage selon l'une quelconque des revendications précédentes, **caractérisée en ce que** le dispositif de rappel comprend des ressorts (15) et/ou des aimants (15').

5. Prise de connexion par enfichage selon l'une quelconque des revendications précédentes, **caractérisée en ce qu'**un témoin lumineux (4) est prévu pour indiquer la bonne connexion par enfichage d'une fiche (20) dans la douille (11) .

6. Prise de connexion par enfichage selon l'une quelconque des revendications précédentes, **caractérisée en ce que** la douille (11) est une douille USB.

7. Module d'alimentation de passager (1) destiné à être agencé dans l'habitacle de véhicules, comprenant un panneau (3) formant le côté d'accès (2) avec au moins une prise de connexion par enfichage (10) encastrée dans celui-ci, selon l'une quelconque des revendications précédentes.

8. Module d'alimentation de passager selon la revendication 7, **caractérisé en ce que** le module d'alimentation de passager (1) est construit sous forme modulaire et comprend, outre le panneau (3) avec au moins une prise de connexion par enfichage (10) encastrée, un module électronique (17) réalisé séparément de celui-ci et relié à la douille (11) de l'au moins une prise de connexion par enfichage (10) par l'intermédiaire d'une liaison par câble (16) amovible.

9. Module d'alimentation de passager selon la revendication 7 ou 8, **caractérisé en ce qu'**il est prévu un nombre de prises de connexion par enfichage (10) correspondant au nombre de places de passagers attribuées au module d'alimentation de passager (1).
